# DEMANDE DE BREVET EUROPEEN

(11) **EP 3 246 621 A1**
(43) Date de publication de la demande: **22.11.2017**
(21) Numéro de dépôt: 17171406.6
(22) Date de dépôt: 16.05.2017
(51) Int. Cl.: F21S 8/12, F21V 8/00

(54) **DIOPTRE REDRESSEUR DE COUPURE**

(30) Priorité: 18.05.2016 FR 1654407
(71) Demandeur: Valeo Vision, 93012 Bobigny Cedex (FR)
(72) Inventeur: LAMINETTE, Maxime, 49000 ANGERS (FR); DOHA, Jean-François, 49000 ANGERS (FR); FLOCH, Lionel, 49000 ANGERS (FR)

(57) **Abrégé**

La présente invention concerne un module d'éclairage (1) apte à donner un faisceau lumineux à coupure pour projecteur de véhicule automobile et/ou dispositif de signalisation, comprenant : - une source lumineuse (2) configurée pour générer un faisceau, - un élément optique (5) formé d'une seule pièce pour recevoir le faisceau généré par la source lumineuse et pour former à partir de ce faisceau ledit faisceau lumineux à coupure ; ledit élément optique comprenant : - un moyen de coupure (8) disposé au sein de l'élément optique, et configuré pour intercepter un partie des rayons du faisceau reçu par l'élément optique et former une coupure dans ce faisceau, et - au moins une face de sortie (7) configurée pour projeter ledit faisceau à coupure hors de l'élément optique, et caractérisé en ce que ladite au moins une face de sortie comporte des moyens de redressement agencés pour modifier l'inclinaison de ladite coupure dans le faisceau à coupure projeté par la face de sortie.

## Description

La présente invention se rapporte à un projecteur lumineux pour véhicule automobile et/ou un dispositif de signalisation. L'invention concerne plus particulièrement un module optique d'éclairage apte à modifier l'inclinaison de la ligne de coupure d'un faisceau lumineux produit par ledit module, afin d'assurer une fonction de projecteurs à LED de virage (*Cornering Lamps*) et/ou d'éclairage directionnel fixe.

Pour le cas de phares à diodes électroluminescentes (LEDs), il est connu des projecteurs émettant un faisceau de forte intensité en direction d'une scène de route. Ces projecteurs peuvent assurer, notamment, des fonctions dites de FBL (*Fixed Bending Light* en anglais) ou d'éclairage directionnel mobile dites de DBL (*Dynamic Bending Light* en anglais). La fonction de virage permet par exemple d'éclairer le bas-côté d'une scène de route lorsque le véhicule effectue un tournant. A cet effet, on prévoit une source lumineuse qui permet de générer un faisceau illuminant la route lors de la négociation d'un virage. Pour éviter cependant que la lumière émise ne crée un éblouissement d'un autre automobiliste, on prévoit généralement des moyens pour réaliser une coupure du faisceau à un certain niveau au-dessus de la route. Les rayons lumineux du faisceau d'éclairage sont typiquement émis au-dessous de cette coupure.

Dans ce contexte, il est connu qu'un projecteur comprenant une source lumineuse constituée par une ou plusieurs diodes électroluminescentes peut générer un faisceau présentant une étendue non négligeable. Pour permettre audit projecteur d'assurer une fonction d'éclairage directionnel fixe et/ou de virage sur un angle d'ouverture limité, il est avantageux d'incliner ledit projecteur par rapport à l'horizontale. Selon la disposition des moyens de coupure dans le projecteur, par exemple selon l'angle d'inclinaison d'un dioptre ou d'une plieuse générant ladite coupure du faisceau, cette coupure n'est plus une ligne horizontale mais une ligne inclinée par rapport à l'horizontale.

Le faisceau produit présente donc également une inclinaison donnée par rapport à l'horizontale, c'est-à-dire par rapport au plan de la route que l'on souhaite éclairer. Or, il est souhaitable de disposer d'un projecteur produisant un faisceau à coupure horizontale malgré une inclinaison dudit projecteur. A cet effet, il est connu des projecteurs lumineux comportant un module optique incliné et émettant un faisceau lumineux à coupure horizontale. Un dispositif de ce type est connu par exemple d'après EP 2009346 A1, qui décrit un module d'éclairage comprenant un ou plusieurs miroirs de renvoi, lesdits miroirs permettant de redresser le faisceau sortant par rapport à l'horizontale.

Ce type de module pose toutefois un certain nombre d'inconvénients. Un problème fréquent rencontré dans ce contexte est qu'un tel dispositif ne permet pas de modifier facilement et précisément l'angle d'inclinaison de la coupure du faisceau. Un autre inconvénient concerne l'encombrement qu'implique l'épaisseur importante d'un tel dispositif, notamment la taille occupée par les différents moyens utilisés pour redresser la coupure du faisceau. Le volume important de ces moyens désavantage la juxtaposition de plusieurs modules pour former un faisceau lumineux à coupure horizontale issu généré par une ou plusieurs sources lumineuses étendues. De plus, il est connu que de tels dispositifs nécessitent des processus de fabrication complexes à l'aide de moules multi-couches. Finalement, la taille volumineuse de ces pièces augmente considérablement le prix pièce desdits modules et rend leur coût de production prohibitif.

Pour pallier ces difficultés, l'invention vise à proposer un projecteur lumineux multi-sources à LED à dioptre pour véhicule, donnant un faisceau à coupure, et dans lequel l'angle d'inclinaison de ladite coupure peut être modifié par une disposition particulière des éléments utilisés pour émettre ledit faisceau.

L'invention a pour but, surtout, de proposer un module d'éclairage apte à donner un faisceau lumineux à coupure pour projecteur de véhicule automobile et/ou dispositif de signalisation, comprenant :
- une source lumineuse configurée pour générer un faisceau,
- un élément optique formé d'une seule pièce pour recevoir le faisceau généré par la source lumineuse et pour former à partir de ce faisceau ledit faisceau lumineux à coupure,
- ledit élément optique comprenant : un moyen de coupure disposé au sein de l'élément optique, et configuré pour intercepter une partie des rayons du faisceau reçu par l'élément optique et former une coupure dans ce faisceau, et au moins une face de sortie configurée pour projeter ledit faisceau à coupure hors de l'élément optique,
et caractérisé en ce que ladite au moins une face de sortie comporte des moyens de redressement agencés pour modifier l'angle d'inclinaison de ladite coupure dans le faisceau à coupure projeté par la face de sortie.

Par « directions sensiblement parallèles », et plus précisément par « rayons sensiblement parallèles » d'un faisceau lumineux, on comprendra ici que les rayons sont dirigés sous la forme d'un faisceau à rayons parallèles ou environ parallèles à plus ou moins 5° près.

Selon différentes caractéristiques supplémentaires dudit module d'éclairage qui pourront être prises ensemble ou de façon séparée :
- lesdits moyens de redressement comportent une modulation d'épaisseur de la face de sortie, ladite modulation d'épaisseur présentant un angle d'incliaison par rapport à l'horizontale dans le plan de la face de sortie ;
- ladite modulation d'épaisseur comprend une pluralité d'ondulations, notamment des ondulations trigonométriques ;
- lesdites ondulations sont sensiblement parallèles entre elles dans le plan de laditela face de sortie et séparées entre elles par un pas constant ;
- les ondulations sont sensiblement parallèles entre elles dans le plan de ladite face de sortie et séparées entre elles par un pas évolutif ;
- l'angle d'inclinaison de ladite coupure par rapport à l'horizontale et l'angle d'inclinaison desdits moyens de redressement par rapport à l'horizontale sont deux angles dont la somme des valeurs égale 90°, à plus ou moins 5° près ;
- lesdits moyens de redressement comprenant une modulation d'épaisseur sont formés par un bossage dans le plan de ladite face de sortie, notamment un bossage sinusoïdal ou quasi-sinusoïdal ;
- une section de ladite face de sortie est une section de lentille cylindrique, ou encore une section de lentille sphérique ;
- ladite source lumineuse comprend une pluralité de diodes électroluminescentes disposées sur un même plan, ledit plan étant disposé sous ledit collimateur et/ou sous ladite plieuse par rapport audit axe optique ;
ledit élément optique comprend en outre :
- un collimateur configuré pour recevoir le faisceau généré par la source lumineuse et pour collimater ce faisceau,
- un coupleur optique configuré pour coupler le faisceau collimaté dans un guide de lumière, au moins une surface dudit guide de lumière étant configurée pour renvoyer une partie des rayons du faisceau couplé dans le guide de lumière.

L'invention vise en outre à proposer un projecteur lumineux caractérisé en ce qu'une face de sortie dudit projecteur lumineux est une face de sortie d'un module d'éclairage selon l'une des caractéristiques supplémentaires citées précédemment.

Selon différentes caractéristiques supplémentaires dudit projecteur lumineux qui pourront être prises ensemble ou de façon séparée :
- plusieurs desdits modules d'éclairage sont juxtaposés, de préférence cinq desdits modules, pour générer un faisceau, dit faisceau résultant, suivant la direction d'un axe optique de l'un desdits modules ;
- les faces de sortie des modules juxtaposés sont alignées suivant une direction prédéterminée;
- la distance séparant le rayon distal dudit faisceau à coupure et ledit axe optique est inférieure ou égale à 10mm ;
- les modules sont configurés pour réaliser une fonction d'éclairage directionnel fixe et/ou de virage avec un flux lumineux inférieur ou égal à 200 lumens.

D'autres caractéristiques, détails et avantages de l'invention ressortiront à la lecture de la description faite en référence aux dessins annexés donnés à titre d'exemple et qui représentent, respectivement :
- la figure 1, une vue en coupe transversale d'un module d'éclairage selon un exemple de réalisation de l'invention ;
- la figure 2, une vue en coupe en perspective d'un collimateur et d'un coupleur selon un exemple de réalisation de l'invention ;
- la figure 3, un schéma illustrant le fonctionnement d'un coupleur selon un exemple de réalisation de l'invention ;
- la figure 4, un schéma illustrant le tracé des rayons lumineux transmis dans un module d'éclairage selon un exemple de réalisation de l'invention ;
- les figures 5a, 5b et 5c, respectivement, une vue en coupe d'un module d'éclairage selon plusieurs exemples de réalisation de l'invention ;
- la figure 6, une vue en coupe de devant d'un module d'éclairage selon un exemple de réalisation de l'invention ;
- la figure 7, un réseau de courbes isolux établies pour un flux lumineux donné, et obtenu avec un module d'éclairage dont la surface de sortie ne comporte pas de modulation d'épaisseur pour modifier l'inclinaison de coupure dudit faisceau ;
- La figure 8, un réseau de courbes isolux établies pour un flux lumineux donné, et obtenu avec un module d'éclairage dont la surface de sortie comporte une modulation d'épaisseur pour modifier l'inclinaison de coupure dudit faisceau ;
- les figures 9a et 9b, une vue en perspective et une vue en coupe du dessus, respectivement, d'un projecteur lumineux selon un premier exemple de mise en oeuvre de l'invention ;
- les figures 10a et 10b, une vue en perspective et une vue en coupe du dessus, respectivement, d'un projecteur lumineux selon un deuxième exemple de mise en oeuvre de l'invention.

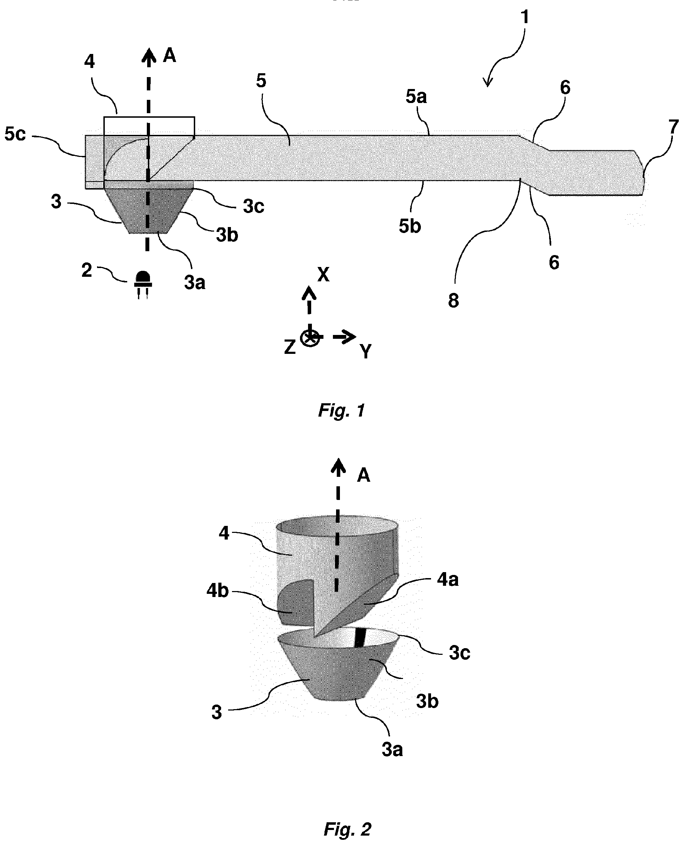

Sur la figure 1, on a représenté une vue en coupe transversale d'un module d'éclairage **1** apte à donner un faisceau lumineux à coupure pour projecteur de véhicule automobile. Pour la suite de la description, on comprendra que les surfaces du module **1** définissent un repère orthogonal XYZ dont les directions X, Y et Z correspondent respectivement à l'axe de hauteur dudit module selon X, à l'axe de longueur dudit module selon Y et à l'axe de largeur dudit module selon Z.

Selon un exemple de réalisation de l'invention, une source lumineuse **2** est disposée en-dessous du module **1.** Dans le cadre du présent texte, on comprendra les termes « au-dessus » et « en-dessous » comme des indications d'orientation quand le module **1** est disposé en position d'utilisation normale, une fois incorporé dans un projecteur lumineux monté dans un véhicule. Selon l'exemple de réalisation de l'invention, nous définirons également le plan de l'horizontale comme étant parallèle au plan de la route éclairée par ledit projecteur dans son mode de fonctionnement nominal. On comprendra qu'un module n'est pas nécessairement orienté parallèlement au plan de l'horizontale selon les directions Y et Z telles que définies respectivement par l'axe de longueur et par l'axe de largeur dudit module. Selon l'exemple de réalisation de l'invention, la source **2** est une source étendue dont les rayons lumineux ont des directions quelconques dans l'espace. De préférence, la source **2** est une diode électroluminescente, en abrégé LED. Avantageusement, la source **2** comprend plusieurs diodes électroluminescentes situées dans un même plan, et par exemple disposées sur un circuit imprimé PCB situé en-dessous du module **1.** Une disposition desdites LEDs sur un même plan PCB facilite la fabrication d'un module d'éclairage selon l'exemple de réalisation de l'invention, notamment les opérations de connexion et de soudage des différents composants.

Comme illustré sur la figure 1, le module d'éclairage **1** comprend un élément optique comportant une pluralité d'éléments. Selon un exemple de réalisation de l'invention, ledit élément optique est formé d'une seule pièce, et comprend des moyens de redirection de lumière, en particulier un collimateur **3,** un coupleur **4** et un guide de lumière **5** tous les deux situés au-dessus de la source lumineuse **2.** Avantageusement, le collimateur **3** et le coupleur **4** peuvent être en contact. Selon l'exemple de réalisation de l'invention, le collimateur **3** est situé en-dessous du guide **5.** Le collimateur **3** est un solide de révolution caractérisé par un axe de révolution **A,** ledit axe de révolution étant dirigé selon la direction X du repère XYZ. Ledit collimateur est constitué d'une ou de plusieurs surfaces réfléchissantes. En variante, ledit collimateur peut comprendre une lentille, un réflecteur, un réfracteur, ou tout autre moyen de collimation de type concave ou convexe.

Tel que représenté sur la figure 1 et sur la figure 2, le collimateur **3** comporte une face inférieure d'entrée **3a,** une ou plusieurs faces latérales de réflexion **3b,** et une face supérieure de sortie **3c.** La face inférieure **3a** du collimateur **3** est une face d'entrée de lumière apte à recevoir de la lumière émise par une source lumineuse lorsque ladite source est disposée sous ledit collimateur. Un collimateur selon l'exemple de réalisation de l'invention est typiquement configuré pour recevoir l'ensemble des rayons de faisceau lumineux émis en-dessous de la face d'entrée **3a,** en particulier l'ensemble des rayons émis par la source **2.** De préférence, la source **2** est disposée sur l'axe **A** et en-dessous du collimateur **3.** La ou les faces latérales **3c** peuvent présenter une forme cylindrique à profil parabolique, ou proche d'une parabole lorsqu'on considère une section de celles-ci dans un plan orthogonal à la direction de l'horizontale. Le collimateur **3** présente en particulier la forme d'un cône tronqué dont les bases **3a** et **3b** sont transparentes au passage de lumière, et donc la ou les faces latérales **3c** réfléchissent la lumière en réflexion totale. Les faces **3a, 3b** et **3c** du collimateur **3** sont calculées de façon à récolter de manière homogène l'intensité lumineuse émise par la source **2.** Indépendamment de leurs directions initiales, les rayons collectés sont réfléchis par une ou plusieurs faces internes dudit collimateur, celui-ci étant configuré pour rendre les rayons récoltés sensiblement parallèles entre eux à la sortie de celui-ci.

Les rayons lumineux émis par la source **2** et traversant le collimateur **3** sont réfractés par la ou les faces latérales **3c** pour être dirigés directement vers la face de sortie **3c** située en regard de la face **3a.** Ces faces sont configurées pour réfléchir les rayons suivant une direction sensiblement parallèle à l'axe X lorsque ceux-ci ressortent du collimateur **3** par la face **3c.** Ces rayons sont transmis en direction de l'entrée du coupleur **4** situé au-dessus du collimateur **3.** Le collimateur **3** est lui-même situé en-dessous du coupleur **4** et en-dessous du guide de lumière **5.**

Le guide de lumière **5** que comprend le module **1** présente une face supérieure **5a** et une face inférieure **5b** reliées entre elles par une tranche **5c.** Les faces supérieure **5a** et inférieure **5b** s'étendent dans des plans sensiblement parallèles entre eux. Le guide de lumière **5** peut cependant présenter plusieurs déformations, en particulier, un ou plusieurs décrochés. Le guide **5** est configuré pour présenter une épaisseur sensiblement constante, c'est-à-dire constante à plus ou moins 10 %, en tout point de sa longueur. On entend par épaisseur la distance séparant la face supérieure **5a** et la face inférieure **5b** dudit guide selon un plan perpendiculaire à ladite face supérieure. Les surfaces internes du guide peuvent être partiellement ou totalement revêtues d'un matériau réfléchissant. Selon un mode de réalisation de l'invention, deux décrochés **6** et une face de sortie **7** sont également présents, comme on le décrira par la suite. Ces décrochés, en particulier le décroché correspondant à la face inférieure **5b,** peuvent jouer le rôle d'une plieuse optique. Les bords de la plieuse et les matériaux constituant celle-ci permettent éventuellement à ladite plieuse de travailler en réflexion totale. Ladite plieuse est apte à dévier verticalement les rayons lumineux provenant du coupleur de façon à former une coupure. Par « plieuse optique », on comprendra ici que ledit décroché présente un bord de coupure **8** et éventuellement, mais pas nécessairement, une surface réfléchissante, pour bloquer et/ou dévier une partie du faisceau lumineux transmis dans le guide de lumière. La présence d'une surface réfléchissante, par exemple une surface réfléchissante convexe, a également l'avantage de permettre un élargissement du faisceau, et donc de créer un faisceau sortant large à coupure. Ladite coupure peut être réalisée par divers moyens comprenant, notamment, un ou plusieurs éléments occultants. Ce ou ces éléments occultants peuvent comporter un écran opaque, un cache, un miroir, ou encore une combinaison de ces éléments. La hauteur de la coupure peut, en particulier, être à la même hauteur que la surface inférieure **5b** du guide de lumière. L'homme de l'art comprendra cependant que l'on peut facilement ajuster cette hauteur de par une modification des dimensions et/ou des positions des surfaces caractérisant le guide de lumière **5.**

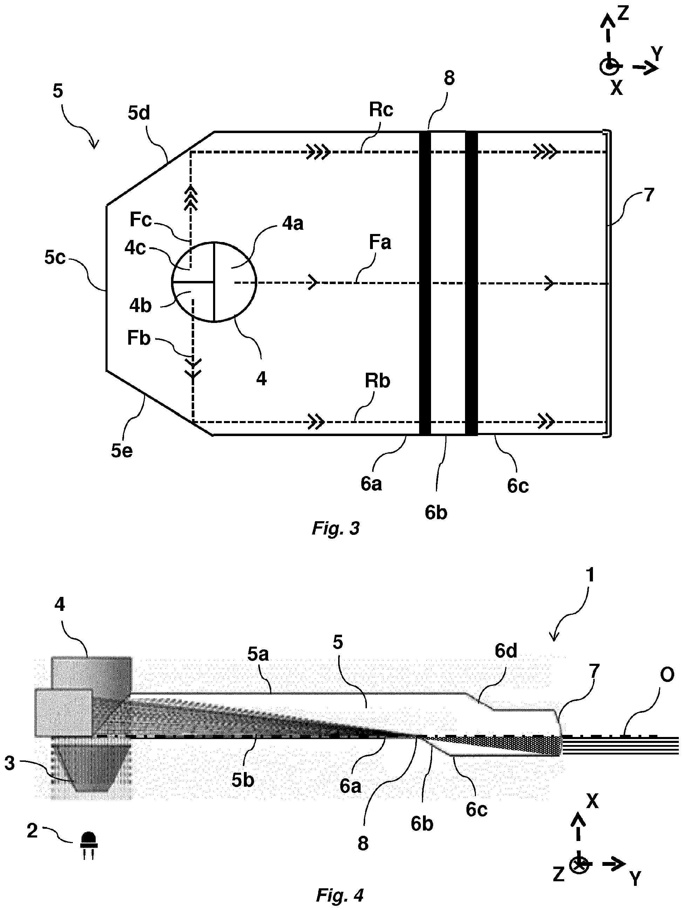

Sur la figure 3, on a représenté une section dans le plan YZ du collimateur **3** et du coupleur **4** tels que précédemment décrits. De préférence, ledit coupleur est aligné en vis-à-vis du collimateur **3** selon la direction X de sorte à ce que la totalité du faisceau lumineux transmis par ledit collimateur soit reçu par ledit coupleur. Le coupleur **4** est configuré pour dévier le faisceau sortant du collimateur **3** et diriger ledit faisceau à l'intérieur du guide de lumière **5.** Le coupleur **4** présente trois faces **4a, 4b** et **4c,** qui sont configurées pour réfléchir et séparer ledit faisceau en trois sous-faisceaux distincts. Lesdites faces sont, typiquement, des surfaces planes travaillant en réflexion totale. De préférence, ces sections sont chacune inclinées d'un angle de 45° par rapport à l'inclinaison définie par l'horizontale, par exemple un plan horizontal YZ. Il en résulte une redirection adéquate d'un faisceau lumineux entrant parallèle à la direction X en trois sous-faisceaux lumineux dirigés selon la direction Y. Les rayons sortant du collimateur **3** et pénétrant dans le coupleur **4** viennent frapper au moins l'une des sections constituées par l'une des faces **4a, 4b** ou **4c.** Chacune desdites faces peut présenter une section parabolique ou semi-parabolique dans des plans parallèles aux axes Y et Z. Lesdites sections paraboliques ou semi-paraboliques présentent une région focale permettant de caractériser un axe optique principal d'un faisceau transmis par le module **1,** ledit axe optique étant dirigé selon la direction Y. Ces régions focales peuvent comporter en particulier un foyer situé à même distance et un sommet situé à une même hauteur.

Comme représenté sur la figure 3, un faisceau entrant dans le coupleur **4** est scindé en trois sous-faisceaux lumineux distincts **Fa, Fb** et **Fc** chacun émis à 90° l'un par rapport l'autre, dans un plan parallèle aux directions Y et Z. Les rayons du sous-faisceau **Fa** sont ainsi réfléchis par la face **4a** et ont une direction sensiblement parallèle à la direction Y. Les rayons du sous-faisceau **Fb** sont réfléchis par la face **4b** et ont une direction sensiblement antiparallèle à la direction Z. Les rayons du sous-faisceau **Fc** sont réfléchis par la face **4c** et ont une direction sensiblement parallèle à la direction Z.

Selon un exemple de réalisation de l'invention, une pluralité de faces **5c, 5d** et **5e,** notamment une pluralité de faces planes, est disposée à proximité du coupleur **4** pour rediriger l'ensemble des rayons des sous-faisceaux **Fa, Fb** et **Fc** dans le guide de lumière **5** selon une direction sensiblement parallèle à la direction Y. Les rayons du sous-faisceau **Fb** sont ainsi réfléchis par la face **4b** en un sous-faisceau **Rb** dirigé selon la direction Y. Les rayons du sous-faisceau **Fc** sont réfléchis par la face **4c** en un sous-faisceau **Rc** dirigé selon la direction Y. Les sous-faisceaux **Fa, Rb** et **Rc** sont ainsi tous dirigés parallèlement vers la plieuse **8** selon la direction Y. De préférence, les faces planes **5c, 5d** et **5e** constituent des surfaces latérales du guide de lumière **5.** La tranche **5c,** en particulier, est située derrière le coupleur **4** et relie la face supérieure **5a** et la face inférieure **5b** du guide de lumière **5.** Les faces **5d** et **5e** sont des faces réfléchissantes travaillant en réflexion totale et sont disposées avec un angle de 45° par rapport à la direction Y. En particulier, la face **5d** est configurée de sorte à réfléchir tout rayon incident **Fc** parallèle à la direction Z en un rayon **Rc** parallèle à la direction Y. La face **5e** est configurée de sorte à réfléchir tout rayon incident **Fb** antiparallèle à la direction Z en un rayon **Rb** parallèle à la direction Y. Chacun des rayons constituant le faisceau lumineux initial émis par la source **2** est ainsi redirigé selon la direction Y sur la plieuse **8** à l'intérieur du guide de lumière **5.**

Sur la figure 4 représentant une vue latérale du module **1,** on a illustré dans le guide de lumière **5** le tracé des rayons transmis par le coupleur **4** en direction de la plieuse **8** formant la coupure du faisceau, puis de la face de sortie **7.** La présence des deux décrochés **6b** et **6d** permet de modifier la hauteur du guide de lumière **5** sans en modifier l'épaisseur. Selon un exemple de réalisation de l'invention, les arêtes des deux décrochés **6b** et **6d** sont inclinées d'un même angle par rapport à la direction de l'horizontale. Le bord supérieur **5a** et le bord inférieur **5b** du guide **5** peuvent présenter une inclinaison d'un même angle par rapport à la direction de l'horizontale. Le bord **8** forme ainsi une plieuse apte à former une coupure du faisceau incident et transmis par les moyens précédemment décrits. Ladite coupure est réalisée suivant un plan de coupure parallèle au bord inférieur **5b** du guide **5.** Ce plan de coupure est situé à même hauteur que la plieuse, c'est-à-dire le bord de coupure **8.** Le décroché du haut, correspondant à la face **5a** dudit guide, permet de modifier la hauteur du guide **5** tout en gardant l'épaisseur de la pièce constante. L'ensemble des rayons lumineux sortants du guide de lumière 5 par la face de sortie **7** sont ainsi contraints à se propager uniquement dans une région de l'espace située au-dessous dudit plan de coupure. En variante, le décroché d'un guide de lumière peut être réalisé pour obtenir la coupure d'une partie inférieure du faisceau.

On comprendra que la position et l'angle du dièdre **6a-6b** sont calculés de façon à ce que la plieuse formée par le bord **8** bloque les rayons lumineux susceptibles de sortir du guide **5** au-dessus de la coupure, ici représentée de manière non limitative comme étant située à même hauteur que l'axe optique **O** et le bord inférieur **5b** du guide de lumière **5.** Les sections paraboliques et/ou semi-paraboliques du coupleur **4** sont travaillées de sorte à définir une région focale permettant de diriger l'ensemble des faisceaux lumineux sur le bord de la plieuse **8,** suivant dans une direction sensiblement parallèle à l'axe optique **O.** L'axe optique **O** est, par exemple, un axe horizontal dirigé selon Y, et parallèle aux faces supérieure **5a** et inférieure **5b** du guide **5.** Selon un exemple de réalisation de l'invention, l'axe optique **O** définit en particulier la direction principale du faisceau lumineux émis assurant une fonction FBL. Le faisceau à coupure est projeté dans une direction sensiblement parallèle à l'axe optique **O.** La hauteur de la ligne de coupure obtenue est ainsi sensiblement égale à la hauteur du bord inférieur **5b** du guide de lumière **5.** La face de sortie **7** permet de fermer le guide de lumière **5,** par exemple à l'aide d'une glace de fermeture en matière plastique ou en verre. La face de sortie **7** permet également de réaliser une image de sortie du faisceau. Une face de sortie selon l'invention peut être, par exemple, une lentille sphérique ou cylindrique permettant d'imager le bord de la plieuse **8** et de projeter le faisceau lumineux vers l'avant du module **1,** en direction de la scène de route.

En résumé, on a représenté sur la figure 4 un exemple de réalisation selon l'invention se rapportant à un module d'éclairage **1** comprenant un élément optique, ledit élément optique comprenant un collimateur **3** situé en-dessous d'un guide de lumière **5** et un décroché **6b-6d** formant le moyen de coupure de l'élément optique. Comme illustré, la source lumineuse **2** est disposée en-dessous du collimateur **3** et émet vers le haut en direction du coupleur optique **4,** configuré pour dévier globalement les rayons du faisceau collimaté selon l'axe optique d'émission, dans le guide de lumière **5.** Pour cet exemple de réalisation, le décroché s'étend depuis une partie supérieure du guide de lumière vers une partie inférieure dudit guide, formant ainsi une marche vers le bas pour réaliser une coupure de la partie supérieure du faisceau.

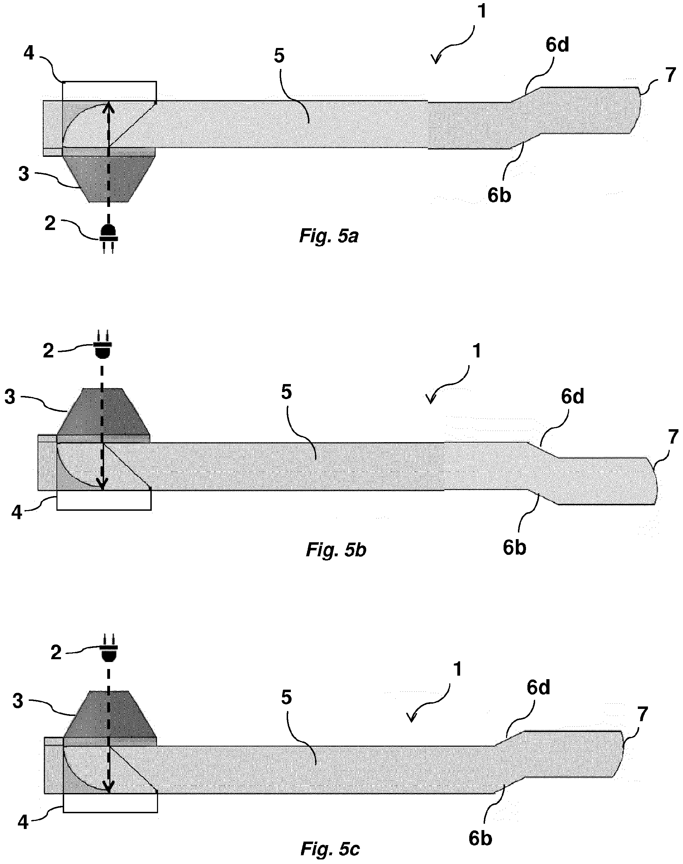

Les figures 5a, 5b et 5c représentent d'autres exemples de réalisation selon l'invention. La figure 5a est ainsi une variante d'un module d'éclairage **1** dans lequel la source lumineuse **2** est disposée en-dessous du collimateur **3** et émet vers le haut en direction du coupleur optique **4.** Le faisceau est transmis dans le guide de lumière **5,** et le faisceau à coupure est projeté par la face de sortie **7.** Pour cette variante, le décroché **6b-6d** s'étend depuis une partie inférieure du guide de lumière **5** vers une partie supérieure dudit guide, formant une marche vers le haut dans le dispositif pour réaliser une coupure de la partie inférieure du faisceau.

La figure 5b est une autre variante d'un module d'éclairage **1** dans lequel la source de lumière **2** est disposée au-dessus du collimateur **3,** ledit collimateur étant lui-même situé au-dessus du coupleur **4.** Pour cette variante, le décroché **6b-6d** s'étend depuis une partie supérieure du guide de lumière **5** vers une partie inférieure dudit guide, formant ainsi une marche vers le bas. Cette disposition et la formation d'une marche vers le bas permet de réaliser une coupure de la partie supérieure du faisceau projeté par la face de sortie **7.**

La figure 5c est une autre variante d'un module d'éclairage **1** dans lequel la source de lumière **2** est disposée au-dessus du collimateur **3,** ledit collimateur étant lui-même situé au-dessus du coupleur **4.** Pour cette variante, le décroché **6b-6d** s'étend depuis une partie inférieure du guide de lumière **5** vers une partie supérieure dudit guide, formant ainsi une marche vers le haut. Cette disposition et la réalisation d'une marche vers le haut permet de réaliser une coupure de la partie inférieure du faisceau projeté par la face de sortie **7.**

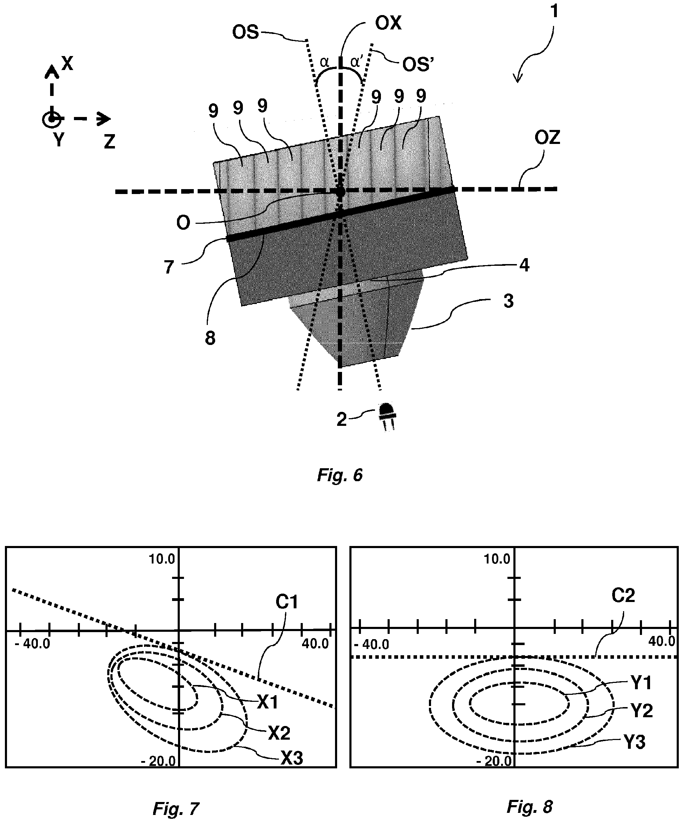

Selon un exemple de réalisation de l'invention, le module **1** peut présenter une inclinaison d'un certain angle par rapport à l'horizontale et autour de la direction Y, tout en présentant un axe optique **O** parallèle à la direction Y. Sur la figure 6, on a représenté une vue en coupe de devant dudit module **1.** La direction d'émission de la source lumineuse **2** est définie par un plan **OS,** dit plan d'émission des sources, passant par l'axe optique **O** du module. En raison de l'inclinaison du module **1,** le plan **OS** est incliné d'un angle donné **α** par rapport à la verticale, en particulier par rapport à un plan transversal **OX** orienté selon la direction **X** et passant par l'axe optique **O** du module. Ledit plan transversal **OX** est perpendiculaire à l'horizontale, en particulier par rapport à un plan horizontal **OZ.** Le plan **OS** est perpendiculaire à la direction de la plieuse **8.**

Comme décrit précédemment, la coupure du faisceau est obtenue à partir de la plieuse **8.** Lorsque le module **1** est incliné d'un certain angle par rapport à l'horizontale, en particulier par rapport au plan horizontal **OZ,** la coupure du faisceau projeté par ledit module est inclinée d'un angle **α**, dit angle d'inclinaison de la coupure.

Pour pallier cette inclinaison et redresser la coupure du faisceau, la face de sortie **7** comprend des moyens de redressement agencés pour modifier l'angle d'inclinaison de la coupure. Selon un exemple de réalisation de l'invention, lesdits moyens de redressement comportent une modulation d'épaisseur de la face de sortie. En particulier, la face de sortie **7** peut être travaillée de sorte à présenter une modulation d'épaisseur de ladite face de sortie. Avantageusement, la modulation d'épaisseur présente un angle d'inclinaison **α'** par rapport à l'horizontale dans le plan de la face de sortie **7.** En particulier, cette modulation d'épaisseur est calculée de sorte à modifier l'angle d'inclinaison de la coupure **α.** Selon un exemple de réalisation de l'invention, la modulation d'épaisseur de la face de sortie peut être formée par un bossage dans le plan de ladite face de sortie, notamment un bossage sinusoïdal ou quasi-sinusoïdal. Selon un exemple de réalisation de l'invention, ladite modulation d'épaisseur peut comprendre une pluralité d'ondulations **9,** notamment des ondulations trigonométriques. Lesdites ondulations sont réalisées de sorte à être sensiblement parallèles à un plan **OS',** dit plan de création des sections ou plan des ondulations. Selon un exemple de réalisation de l'invention, ce plan de création des sections **OS'** est incliné d'un angle **α'** par rapport au plan transversal **OX.** Selon un exemple de réalisation de l'invention, l'angle d'inclinaison **α** de de la coupure et l'angle d'inclinaison **α'** des ondulations des ondulations sont deux angles dont la somme des valeurs égale 90°, à plus ou moins 5° près. En d'autres termes, l'angle **α'** entre le plan **OS'** et le plan **OX** est avantageusement complémentaire à l'angle d'inclinaison **α** entre le plan **OS** et le plan **OX.**

Selon un exemple de réalisation de l'invention, ladite face de sortie peut être une lentille. Dans cet exemple de réalisation, ladite lentille peut présenter une face ondulée comportant des ondulations présentant une même pente verticale, ou des pentes verticales différentes par rapport à l'horizontale. Avantageusement, la face de sortie **7** est travaillée de sorte à comporter des ondulations sensiblement parallèles entre elles dans le plan de ladite face de sortie. De préférence, les ondulations **9** sont séparées entre elles par un pas constant. En variante, les ondulations **9** sont séparées entre elles par un pas évolutif. Ces ondulations prennent typiquement la forme de bosses se répartissant sur l'ensemble de la face de sortie. Ces bosses peuvent être munies de motifs, et/ou peuvent être constituées par des évidements, des reliefs, ou encore une combinaison d'évidements et de reliefs. La présence d'ondulations sur la face de sortie **7** a pour effet modifier l'inclinaison de la coupure. En particulier, ces ondulations peuvent être calculées pour réaliser un faisceau dont la coupure est redressée horizontalement. La coupure du faisceau résultant peut donc être horizontale tandis que l'inclinaison de la plieuse **8** générant ladite coupure est inclinée d'un certain angle par rapport à l'horizontale.

La forme des modulations sur la face de sortie du module peut être un bossage sinusoïdal ou quasi-sinusoïdal. La forme des modulations sur la face de sortie du module est typiquement une courbe cylindrique ou quasi-cylindrique.

Selon un exemple de réalisation de l'invention, la face de sortie **7** est continue et présente des ondulations **9.** Chaque ondulation peut être extrudée. La géométrie de la face de sortie, et la géométrie de ces ondulations extrudées, peut correspondre à différentes formes, par exemple une section de lentille cylindrique, ou encore une section de lentille sphérique.

Les figures 7 et 8 illustrent un exemple de photométrie d'un faisceau à coupure pour un module d'éclairage tel que décrit précédemment, et dont le bord de la plieuse **8** formant ladite coupure est inclinée d'un angle de 30° par rapport à l'horizontale. Le faisceau lumineux généré par ledit module peut être représenté par un ensemble de surfaces fermées, correspondant à différentes courbes isolux, par exemple **X1, X2** et **X3.** Chacune de ces courbes correspond à une courbe isolux pour un flux lumineux donné caractérisant l'éclairement du faisceau généré par le module **1.**

La figure 7 illustre le cas particulier d'un module d'éclairage dont la face de sortie ne comporte pas de modulation d'épaisseur pour modifier l'inclinaison de coupure dudit faisceau. Comme représenté sur la figure 7, les courbes **X1, X2** et **X3** sont toutes situées en-dessous d'une même ligne de coupure, ici représentée par la ligne **C1** en pointillés. On comprendra que ladite ligne de coupure **C1** est inclinée d'un même angle que le bord de la plieuse **8** par rapport à l'horizontale, ici un angle de 30°. Ladite ligne de coupure **C1** et également tangente à l'ensemble des courbes **X1, X2** et **X3.**

La figure 8 illustre le cas d'un module d'éclairage selon un exemple de réalisation de l'invention, et dont la face de sortie comporte une modulation d'épaisseur permettant de modifier l'angle d'inclinaison de la coupure dudit faisceau par rapport à l'horizontale. Ladite modulation d'épaisseur de la face de sortie **7** est calculée pour modifier l'angle d'inclinaison de la ligne de coupure **C1** par rapport à l'horizontale. Dans le cas ici décrit, cet angle d'inclinaison est égal à l'angle de 30°, présent entre le bord de la plieuse **8** et l'horizontale.

Lorsque les rayons lumineux du faisceau traversent la face de sortie **7,** la modulation d'épaisseur modifie donc l'inclinaison de la ligne de coupure **C1** de sorte à obtenir une ligne de coupure **C2** horizontale. Comme représenté sur la figure 8, les courbes isolux **X1, X2** et **X3** sont ainsi modifiées en courbes isolux **Y1, Y2** et **Y3.** Lesdites courbes sont finalement toutes situées en-dessous d'une même ligne de coupure, horizontale, ici représentée par la ligne **C2** en pointillés.

Pour cet exemple, la face de sortie est travaillée de sorte à ce que les ondulations sur ladite face de sortie présentent une pente de 60° avec l'horizontale, à plus ou moins 5° près. L'angle de cette pente est complémentaire à l'angle de 30° formé entre le bord de la plieuse **8** et l'horizontale. Ce mode de réalisation permet ainsi de redresser une ligne de coupure d'un faisceau, ladite ligne de coupure générée étant également inclinée d'un angle de 30° en raison de la disposition du bord de la plieuse. Avantageusement, on "redresse" donc un faisceau en faisant tourner l'image projetée du bord de la plieuse **8** autour d'un axe parallèle à l'horizontale. Cet axe passe par le centre du bord de la plieuse **8** et est parallèle à l'axe longitudinal du véhicule.

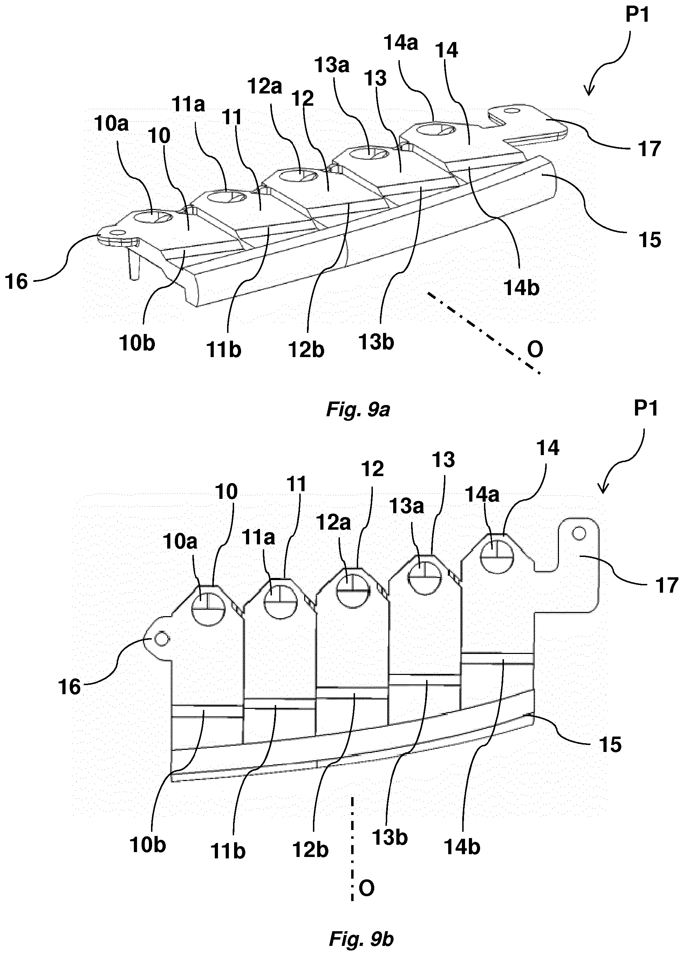

Les figures 9a et 9b illustrent un projecteur lumineux **P1** selon un premier exemple de mise en oeuvre de l'invention, en perspective et en vue du dessus, respectivement. Un tel projecteur est typiquement configuré pour donner une pièce de faible épaisseur. Selon le mode de réalisation représenté, ledit projecteur **P1** est constitué de plusieurs modules d'éclairage juxtaposés l'un à côté de l'autre, de préférence cinq modules d'éclairage **10, 11, 12, 13** et **14** accolés l'un à l'autre. Lesdits modules sont configurés pour empêcher le passage de rayons parasites d'un module à l'autre. Le projecteur **P1** peut aussi être muni de points d'attaches **16** et **17,** situés de part et d'autre des extrémités dudit projecteur, pour sa fixation à l'intérieur d'un véhicule automobile.

Lesdits cinq modules sont par exemple des modules SBL (*Static Bending Light* en anglais, pour éclairage directionnel statique). Le flux sortant d'un tel dispositif est typiquement de l'ordre de 340 lm, avec une efficacité de 30%. Chacun de ces modules présente, individuellement, l'ensemble des caractéristiques techniques d'un module d'éclairage **5** tel que décrit précédemment. Le projecteur **P1** comporte également une pluralité de sources lumineuses non représentées sur les figures 9a et 9b. Lesdites sources lumineuses, de préférence cinq sources lumineuses, sont disposées sur un même plan en-dessous de chaque module d'éclairage. Lesdites sources lumineuses sont en particulier des diodes électroluminescentes de type LED. En particulier, chacun des modules d'éclairage **10, 11, 12, 13** et **14** comprend des moyens de redirection de la lumière comportant un collimateur, un coupleur, un guide de lumière et une ou plusieurs faces planes de réflexion réunis en une seule pièce et permettant de rediriger un faisceau lumineux suivant une direction sensiblement parallèle à un axe optique **O.**

Comme décrit précédemment, le collimateur de chacun desdits modules a pour fonction de récolter le faisceau lumineux émis par l'ensemble des sources lumineuses situées en-dessous des modules d'éclairage que comporte le projecteur **P1.** Comme décrit précédemment, le coupleur de chacun desdits modules a pour fonction de séparer ledit faisceau en trois sous-faisceaux, et de diriger lesdits sous-faisceaux dans le guide de lumière que comporte chaque module de **P1.** Chaque coupleur, typiquement, présente des sections paraboliques ou semi-paraboliques. Les foyers de ces sections se trouvent sur le bord d'un décroché du module correspondant, pour faire converger les faisceaux lumineux en ces foyers et ainsi réaliser une coupure du faisceau généré par chaque module. Ces sections sont donc configurées pour diriger lesdits sous-faisceaux sur les bords des plieuses **10b, 11b, 12b, 13b** et **14b,** chacune desdites plieuses étant apte à réaliser une coupure du faisceau généré par chaque module.

Le faisceau à coupure obtenu est ensuite dirigé en direction des surfaces de sortie des modules que comporte le projecteur **P1,** et suivant une direction sensiblement parallèle à un axe optique **O** donné. Ledit axe optique **O** correspond, par exemple, à l'axe optique de l'un des modules, par exemple le module central **12.** L'angle d'ouverture permis par la face de sortie de chacun desdits modules permet typiquement de générer un faisceau de 15° à 20° de largeur. La juxtaposition de cinq desdits modules permet, typiquement de générer un faisceau global résultant présentant une ouverture comprise entre 20° et 80°.

Selon un exemple de réalisation de l'invention, le projecteur **P1** présente une face de sortie constituée d'une seule pièce commune à l'ensemble des cinq modules d'éclairage **10, 11, 12, 13** et **14.** En particulier, et comme représenté, les faces de sortie de chacun desdits modules sont réunies en une seule surface lisse continue **15,** par exemple une glace commune à l'ensemble des modules. En variante, ladite surface peut être perlée et/ou grainée au lieu d'être lisse. Ladite surface **15** peut présenter des ondulations aptes à redresser la ligne de coupure du faisceau généré par chaque module.

Toujours selon cet exemple de réalisation de l'invention, les bords des plieuses **10b, 11b, 12b, 13b** et **14b** de chacun des modules d'éclairage juxtaposés ne sont pas nécessairement alignées sur une même ligne. On comprendra qu'un petit décalage vertical peut être permis entre deux modules accolés l'un à l'autre. Avantageusement, les ondulations sur la face de sortie **15** sont configurées de façon à ce qu'un projecteur constitué de plusieurs desdits modules génère un faisceau résultant dont la plan de coupure est parallèle à l'horizontale. La coupure apparaît ainsi comme une ligne horizontale sur la route. De plus, chacun desdits modules peut être incliné par rapport à l'horizontale avec un certain angle, par exemple 45°. Les bords des plieuses **10b, 11b, 12b, 13b** et **14b** réalisant la coupure du faisceau généré par chacun de ces modules inclinés seront donc également inclinés avec un angle égal. La juxtaposition de plusieurs modules, notamment cinq modules, est cependant réalisée de sorte à permettre au projecteur **P1** de générer un faisceau lumineux présentant un même plan de coupure.

Les figures 9a et 9b illustrent un projecteur lumineux selon un deuxième exemple de mise en oeuvre de l'invention, en perspective et en vue du dessus, respectivement. Un projecteur lumineux **P1** est constitué de plusieurs modules d'éclairage juxtaposés l'un à côté de l'autre, de préférence cinq modules d'éclairage **10, 11, 12, 13** et **14** accolés l'un à l'autre.

Similairement à l'exemple de réalisation précédent, chacun desdits modules comprend un collimateur, un coupleur, un guide de lumière et une ou plusieurs faces planes de réflexion réunis en une seule pièce. Suivant ce mode de réalisation, les décrochés **10b, 11b, 12b, 13b** et **14b** associés aux différents modules d'éclairage juxtaposés sont sensiblement alignés les uns par rapport aux autres. De préférence, les modules du projecteur ne sont pas décrochés et sont tous situés à une hauteur sensiblement identique. Cette configuration permet de réaliser un projecteur de faible épaisseur donnant un faisceau à coupure.

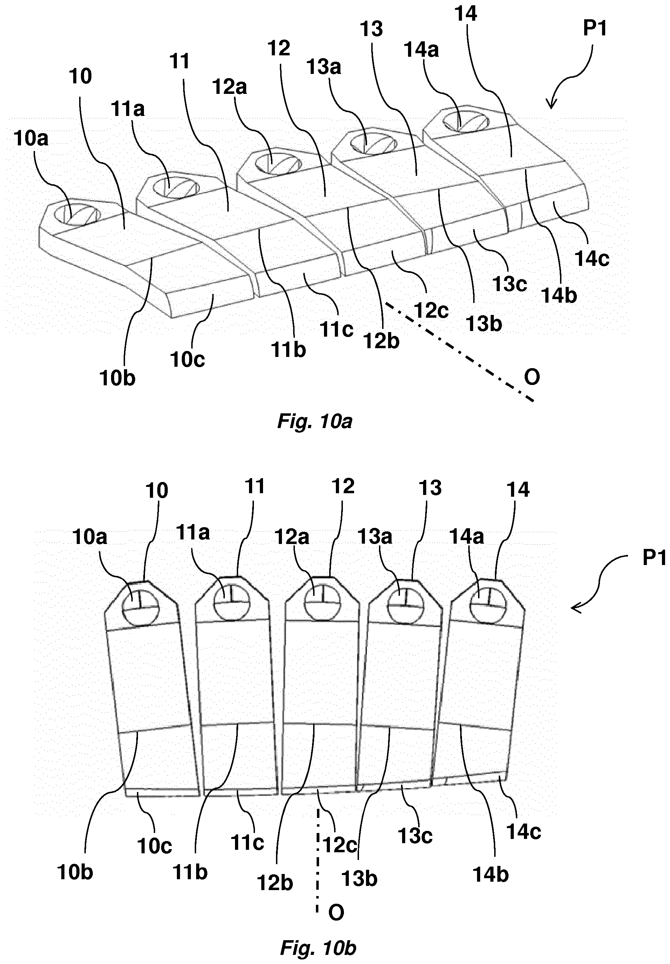

Une pluralité de sources lumineuses, par exemple cinq LEDs, est disposée sur un plan en-dessous desdits modules d'éclairage. Ces LEDs ne sont pas représentées sur les figures 10a et 10b. Chacun desdits collimateurs est configuré pour récolter la plus grande partie possible de l'intensité lumineuse émise par chacune desdites LEDs. Le faisceau est ensuite transmis aux coupleurs **10a, 11a, 12a, 13a** et **14a** situés au-dessus de chaque collimateur, pour être ensuite dirigé sur le bord des plieuses **10b, 11b, 12b, 13b** et **14b** dans le module d'éclairage correspondant. Les rayons sont ensuite dirigés en direction d'une ou de plusieurs surfaces de sortie, suivant une direction sensiblement parallèle à un axe optique **O** donné. Selon le présent exemple de réalisation de l'invention, la ou les surfaces de sortie sont configurées pour contrecarrer l'inclinaison des modules et/ou des lignes de coupure générées par chacun des modules.

Comme précédemment, le bord desdites arêtes correspond aux régions focales des sections paraboliques caractérisant lesdits coupleurs. Les arêtes permettent alors de réaliser une coupure de chaque faisceau transmis en bloquant les rayons situés au-dessus de celle-ci. Le projecteur **P1** présente une face de sortie constituée de plusieurs pièces **10c, 11c, 12c, 13c** et **14c.** Ces pièces peuvent éventuellement comporter une seule face de sortie commune à l'ensemble des cinq modules d'éclairage **10, 11, 12, 13** et **14.** Ces faces de sorties peuvent être constituées d'une ou de plusieurs surfaces lisses, afin d'imager les arêtes **10b, 11b, 12b, 13b** et **14b.** Lesdites faces de sortie peuvent également être modifiées de telle sorte à focaliser la lumière sur une arête travaillant en réflexion totale. Ainsi, l'image de sortie du module sera un faisceau à coupure.

Ces caractéristiques permettent de réaliser un projecteur lumineux constitué d'une seule pièce. Selon un exemple de réalisation de l'invention, un projecteur présentant ces caractéristiques est apte à réaliser une fonction d'éclairage à coupure sur une hauteur de sortie très fine, avantageusement inférieure à 10mm. Par « hauteur de sortie avantageusement inférieur à 10 mm », on comprendra ici que la distance séparant le rayon distal dudit faisceau à coupure et l'axe optique **O** dudit faisceau est avantageusement inférieure ou égale à 10mm.

Indépendamment des dimensions des dispositifs correspondants, un projecteur lumineux suivant le premier mode de réalisation décrit et/ou un projecteur lumineux suivant le deuxième mode de réalisation décrit peut en particulier être configuré pour réaliser une fonction FBL et/ou de virage, avec un flux lumineux inférieur ou égal à 200 lumens.

Ce type de dispositif optique présente l'avantage d'être constitué d'une seule pièce pour réaliser l'imagerie désirée, tout en présentant une épaisseur constante. La faible épaisseur de la pièce permet également de fabriquer ce type de projecteur lumineux par injection sur une presse classique. Ce mode de fabrication ne nécessite pas l'utilisation de moules multi-couches, réduisant également son coût de production. Finalement, ce type de dispositif présente un encombrement réduit, facilitant son incorporation dans un véhicule.

Naturellement, pour satisfaire des besoins spécifiques, une personne compétente dans le domaine de l'invention pourra appliquer des modifications dans la description précédente.

Bien que la présente invention ait été décrite ci-dessus en référence à des modes de réalisation spécifiques, la présente invention n'est pas limitée aux modes de réalisation spécifiques, et les modifications qui se trouvent dans le champ d'application de la présente invention seront évidentes pour une personne versée dans l'art.

## Revendications

1. Module d'éclairage (1) apte à donner un faisceau lumineux à coupure pour projecteur de véhicule automobile et/ou dispositif de signalisation, comprenant :
- une source lumineuse (2) configurée pour générer un faisceau,
- un élément optique formé d'une seule pièce pour recevoir le faisceau généré par la source lumineuse et pour former à partir de ce faisceau ledit faisceau lumineux à coupure ;
ledit élément optique comprenant :
- un moyen de coupure (8) disposé au sein de l'élément optique, et configuré pour intercepter une partie des rayons du faisceau reçu par l'élément optique et former une coupure dans ce faisceau, et
- au moins une face de sortie (7) configurée pour projeter ledit faisceau à coupure hors de l'élément optique,
et **caractérisé en ce que** ladite au moins une face de sortie comporte des moyens de redressement agencés pour modifier l'angle d'inclinaison de ladite coupure dans le faisceau à coupure projeté par la face de sortie.

2. Module d'éclairage selon la revendication 1, **caractérisé en ce que** lesdits moyens de redressement comportent une modulation d'épaisseur de la face de sortie, ladite modulation d'épaisseur présentant un angle d'inclinaison par rapport à l'horizontale dans le plan de la face de sortie.

3. Module d'éclairage selon la revendication 2, **caractérisé en ce que** ladite modulation d'épaisseur comprend une pluralité d'ondulations (9), notamment des ondulations trigonométriques.

4. Module d'éclairage selon la revendication 3, **caractérisé en ce que** lesdites ondulations sont sensiblement parallèles entre elles dans le plan de ladite face de sortie et séparées entre elles par un pas constant.

5. Module d'éclairage selon la revendication 3, **caractérisé en ce que** lesdites ondulations sont sensiblement parallèles entre elles dans le plan de ladite face de sortie et séparées entre elles par un pas évolutif.

6. Module d'éclairage selon l'une quelconque des revendications précédentes, **caractérisé en ce que** l'angle d'inclinaison de ladite coupure par rapport à l'horizontale et l'angle d'inclinaison desdits moyens de redressement par rapport à l'horizontale sont deux angles dont la somme des valeurs égale 90°, à plus ou moins 5° près.

7. Module d'éclairage selon l'une quelconque des revendications 2 à 5, **caractérisé en ce que** lesdits moyens de redressement comprenant une modulation d'épaisseur, sont formés par un bossage dans le plan de ladite face de sortie, notamment un bossage sinusoïdal ou quasi-sinusoïdal.

8. Module d'éclairage selon l'une quelconque des revendications précédentes, **caractérisé en ce qu'**une section de ladite face de sortie est une section de lentille cylindrique, ou encore une section de lentille sphérique.

9. Module d'éclairage selon l'une quelconque des revendications précédentes, **caractérisé en ce que** ladite source lumineuse comprend une pluralité de diodes électroluminescentes disposées sur un même plan, ledit plan étant disposé sous ledit collimateur et/ou sous ladite plieuse.

10. Module d'éclairage selon l'une quelconque des revendications précédentes, **caractérisé en ce que** ledit élément optique comprend en outre :
- un collimateur (3) configuré pour recevoir le faisceau généré par la source lumineuse et pour collimater ce faisceau,
- un coupleur optique (4) configuré pour coupler le faisceau collimaté dans un guide de lumière (5), au moins une surface dudit guide de lumière étant configurée pour renvoyer une partie des rayons du faisceau couplé dans le guide de lumière ;

11. Projecteur lumineux (P1) **caractérisé en ce qu'**une face de sortie dudit projecteur lumineux est une face de sortie d'un module d'éclairage selon l'une des revendications 1 à 10.

12. Projecteur lumineux selon la revendication 11, comprenant plusieurs modules d'éclairage (10, 11, 12, 13, 14), **caractérisé en ce que** plusieurs desdits modules sont juxtaposés, de préférence cinq desdits modules, pour générer un faisceau, dit faisceau résultant, suivant la direction d'un axe optique de l'un desdits modules.

13. Projecteur lumineux selon la revendication 12, **caractérisé en ce que** les faces de sortie (10c, 11c, 12c, 13c, 14c) des modules juxtaposés sont alignées suivant une direction prédéterminée.

14. Projecteur lumineux selon l'une quelconque des revendications 12 à 13, **caractérisé en ce que** la distance séparant un rayon distal dudit faisceau à coupure et ledit axe optique est inférieure ou égale à 10mm.

15. Projecteur lumineux selon la revendication 14, **caractérisé en ce que** lesdits modules sont configurés pour réaliser une fonction d'éclairage directionnel fixe et/ou de virage avec un flux lumineux supérieur ou égal à 200 lumens.
